# EUROPÄISCHE PATENTSCHRIFT

(11) **EP 1 090 970 B1**
(45) Veröffentlichungstag und Bekanntmachung des Hinweises auf die Patenterteilung: **11.08.2004**
(21) Anmeldenummer: 00121283.6
(22) Anmeldetag: 06.10.2000
(51) Int. Cl.: C09J 7/02, E04B 1/66, E04D 12/00

(54) **Dampfbremsen-Klebeband für eine Firstpfette**
Vapour barrier adhesive tape for a roof ridge purlin
Ruban adhésif pare-vapeur pour panne de faîte

(30) Priorität: 06.10.1999 DE 19948058
(43) Veröffentlichungstag der Anmeldung: 11.04.2001
(73) Patentinhaber: Silu Verwaltung AG, 6045 Meggen (CH)
(72) Erfinder: Sieber, Reto, 6019 Sigigen (CH); Sieber, Marco, 6048 Horw (CH)
(74) Vertreter: Leske, Thomas, Dr.

(56) Entgegenhaltungen:
- US-A- 4 153 747
- US-A- 5 593 771

## Beschreibung

Die vorliegende Erfindung betrifft ein einseitig klebendes Dampfbremsen-Klebeband, welches einen Dampfbremsstreifen sowie Klebestreifen hat.

Ein einseitig klebendes Dampfbremsen-Klebeband ist beispielsweise aus DE 297 23 454 bekannt. Dieses Dampfbremsen-Klebeband hat einen luftdichten Träger, welcher auf der einen Seite mit einem diffusionsfähigen Kunststoff beschichtet ist und auf der anderen Seite mit einem Haftkleber versehen ist. Ein derartiges Dampfbremsen-Klebeband ist über die gesamte Breite verklebbar. Dieses Klebeband ist aufgrund seines Aufbaus luftdicht. Eine derartige Luftdichtigkeit ist heutzutage beim Dachbau erforderlich. Zu diesem Zweck ist es üblich, daß Dampfbremsen - auch Dampfsperren genannt - luftdicht eingebaut werden. Dafür werden luftdichte Folien oder Bahnen aus Papier oder Kunststoff warmseitig unter eine Dämmung getackert und überlappend luftdicht verklebt.

Beim Dachbau ist es oftmals aus Bauablaufgründen in einem Bereich eines Giebelbalkens - auch Firstpfette genannt - nicht möglich, eine gesetzlich geforderte, absolute Luftdichtigkeit zu erreichen. Deshalb werden Dampfbrems-Bahnen, die beidseitig vom Mauerwerk her schräg in dem Dach hochlaufen, in Richtung Giebel auf einer ganzen Firstlänge aufwendig an die Firstpfette seitlich angeschlossen. Ein Zimmermann bzw. Dachdecker legt dafür in der Regel einen Folienstreifen in einer Breite von ca. 40 bis 70 cm über die Gesamtlänge der Firstpfette. Dies ist nur möglich zu einem Zeitpunkt, bei dem der rohe Dachstock erstellt worden ist, somit vor einem Einbau einer Dämmung und des gesamten Dachaufbaus wie beispielsweise den Dachziegeln bzw. einer Verblendung.

Der auf der Firstpfette aufgelegte Folienstreifen ist entweder aus Dampfbrems-Material herausgeschnitten oder aber schon in der Breite von 40 bis 70 cm angeliefert. Aufgelegt auf der Firstpfette hängt der Folienstreifen nun auf beiden Seiten der Firstpfette herunter. Zur Gewährleistung der Sicherheit der auf dem Dachstock arbeitenden Personen ist der Folienstreifen in der Regel auf seiner nach oben weisenden Seite rutschfest und wird zusätzlich mit Klammern auf die Firstpfette festgetackert. Dadurch kann der Folienstreifen auf der Firstpfette nicht verschoben werden. Die mit dem Folienstreifen abgedeckte Firstpfette ist somit auch während des Aufbaus des Daches und dem Einbau einer Dämmung ohne Rutschgefahr begehbar.

Nach dem die Firstpfette mit dem Folienstreifen abgedeckt worden ist, wird das Dach gedämmt und der Aufbau des Daches mit Unterdeckbahnen und Ziegeln versehen. Innenseitig wird anschließend eine Dampfbremse bis zur Firstpfette, also dem Giebel luftdicht eingebaut. Im Giebelbereich können nun die herunterhängenden Abschnitte des auf der Firstpfette befestigten Folienstreifens an die benachbarte Dampfbremse hochgeklappt werden und mit einem entsprechenden ein- oder zweiseitigen Klebeband luftdicht angeschlossen werden. Hierfür werden entsprechende Klebebänder verwendet, die eine Luftdichtigkeit gewährleisten.

Bekannt ist, daß ein derartiger Folienstreifen als Dampfbremsstreifen in einer Breite von 40 bis ca. 70 cm in einem linken wie auch rechten Abschnitt schon mit einem doppelseitigen Klebeband versehen ist und so auf eine Baustelle geliefert wird. Ein Handwerker ist dadurch in der Lage, ohne ein zusätzliches Klebeband eine luftdichte Verklebung zwischen dem auf der Firstpfette aufliegenden Firstpfettenstreifen und der am Dachstuhl befestigten flächigen Dampfbremse herstellen zu können. Dieses Dampfbremsen-Klebeband weist die zweiseitig klebenden Klebebänder, die in etwa 2 cm breit sind, beabstandet vom Rand des Folienstreifens auf.

Aus dem US-Patent US 5,593,771 ist ein Laminatmaterial zur klebenden Verbindung von Bauelementen im Hausbau bekannt, wobei dieses Laminatmaterial eine Barriereschicht mit Durchgängen dort hindurch vorsieht, welche den Durchgang von Wasserdampf dort hindurch erlauben. Beidseitig dieser Barriereschicht sind Klebebandstreifen zur Verklebung der einzelnen Bauelemente entlang deren Fügespalten vorgesehen. Einen dampfdichten Abschluss auch unter schwierigen Verarbeitungsbedingungen, wie sie beispielsweise im Bereich das Dachausbaus aufgrund von Witterungseinflüssen vorliegen, bietet das dort beschriebene Laminatmaterial nicht.

Aufgabe der vorliegenden Erfindung ist es, ein Dampfbremsen-Klebeband mit einem Dampfbremsstreifen zu schaffen, der eine sichere luftdichte Verklebung insbesondere im Dachgiebelbereich beim Dachausbau ermöglicht.

Diese Aufgabe wird mit einem einseitig klebenden Dampfbremsen-Klebeband mit den Merkmalen gemäß Anspruch 1 sowie mit einem Verfahren zum Herstellen einer dampfdichten Verbindung bei einem Dachausbau an einer Firstpfette mit den Merkmalen gemäß Anspruch 8 gelöst. Vorteilhafte Weiterbildungen sind in den abhängigen Ansprüchen angegeben.

Ein einseitig klebendes Dampfbremsen-Klebeband mit einem Dampfbremsstreifen ist so aufgebaut, daß der Dampfbremsstreifen eine Breite zwischen mindestens 35 cm und vorzugsweise 100 cm hat und an jeweils beiden Längsrändem des Dampfbremsstreifens ein einseitig klebender Dampfbremsen-Klebestreifen angeordnet ist. Jeder Dampfbremsen-Klebestreifen ist auf seiner Klebeseite mit einem separat abziehbaren Schutz versehen, der ein unbeabsichtigtes Verkleben der Klebestreifen verhindert. Vorzugsweise hat der Dampfbremsen-Klebestreifen eine Breite zwischen 4 cm und 10 cm. Einerseits ermöglicht dies eine sichere Befestigung und Dichtigkeit zwischen dem Dampfbremsstreifen und dem Dampfbremsen-Klebestreifen selbst. Andererseits verbleibt dadurch eine genügende Breite der Klebeseite, um einen luftdichten Anschluß an eine benachbarte Dampfbremse zur Firstpfette zu schaffen. Der einseitig klebende Dampfbremsen-Klebestreifen ist insbesondere so angebracht, daß ein Teil desselben, etwa 30 bis 70%, vorzugsweise etwa die Hälfte von dessen Breite, auf dem Dampfbremsstreifen klebt oder mit diesem verschweißt ist. Der darüber hinausschauende Abschnitt ist an der Klebeseite mit einem Schutzpapier abgedeckt. Zum luftdichten Verkleben braucht das Schutzpapier nur von der überstehenden Klebeseite abgezogen zu werden, dieser Abschnitt des Dampfbremsen-Klebeband hochgeklappt und an die Dampfbremse angerieben zu werden. Die derartig hergestellte Verbindung ist luftdicht, wobei aufgrund der nur einseitig vorhandenen Klebeseite die Gefahr minimiert ist, daß Falten oder Wellen entstehen, die dazu führen würden, daß die Verbindung zwischen dem Dampfbremsen-Klebeband und der flächigen Dampfbremse des Daches nicht luftdicht ist. Eine Verbesserung der erzielbaren Luftdichtigkeit insbesondere auch auf Langzeitwirkung hin gesehen, ergibt sich, wenn für den Dampfbremsen-Klebestreifen ein Folienträger verwendet wird, der den Kleber trägt. Dieser Folienträger ist besonders anschmiegsam und kann daher selbst bei eventuell auftretenden Falten diese aufgrund von Reibwirkung luftdicht verschließen.

Bevorzugt ist es, wenn der mit einem Schutz versehene Abschnitt des Dampfbremsen-Klebestreifens, der bezüglich des Dampfbremsstreifens übersteht, vorzugsweise 1,5 cm bis 3 cm breit ist. Da im Dachausbau Holz das übliche verwendete Baumaterial ist, dieses aber - über die Zeit betrachtet - weiter "arbeitet", insbesondere aufgrund der großen Temperaturunterschiede zwischen Sommer und Winter, ermöglicht eine derartige Breite des Dampfbremsen-Klebestreifens, daß eine ausreichende Klebfläche vorgesehen ist, um ein Verziehen der verwendeten Baumaterialien ausgleichen zu können. Eine besondere Festigkeit ergibt sich, wenn der Dampfbremsen-Klebestreifen in einen Lagenaufbau des Dampfbremsstreifens mit integriert ist. Der Dampfbremsstreifen wird beispielsweise mehrlagig aufgebaut, so daß der Dampfbremsen-Klebestreifen zwischen zwei dieser Lagen angeordnet sein kann. Ebenfalls besteht die Möglichkeit, daß der Dampfbremsen-Klebestreifen eine Oberfläche des Dampfbremsstreifens ausbildet und dabei mit der benachbarten Oberfläche dieses Dampfbremsstreifens bündig abschließt. Dies bietet sich insbesondere bei einem Verschweißen des Dampfbremsen-Klebestreifens mit dem Dampfbremsstreifen an, da dadurch eine Entstehung von Fugen oder Fugenansätzen vermieden werden kann.

Eine weitere Ausgestaltung des Dampfbremsen-Klebebandes sieht vor, daß der Dampfbremsen-Klebestreifen teilweise auf den Dampfbremsstreifen aufgeklebt ist. Vorzugsweise ist der Dampfbremsstreifen ungefähr 60 cm breit. Dadurch gelingt es, zum einen für verschiedenartige Konstruktionen des Anschlusses zwischen Firstpfette und Dachbalken eine ausreichende Fläche des Dampfbremsstreifens vorzusehen. Zum anderen ist eine derartige Länge des Dampfbremsstreifens aufgrund seiner Breite ausreichend flexibel, Kleinstbewegungen des Gebälkes ausgleichen zu können, ohne daß die Luftdichtigkeit der Dampfbremsen gefährdet wird. Vorzugsweise weist ein derartig breiter Dampfbremsstreifen an seinen Längsrändern Dampfbremsen-Klebestreifen mit einer zu verklebenden, mit einem abziehbaren Schutz versehenen Klebeseite auf, die eine Breite aufweist, welche gleich oder größer als die Breite des überstehenden Klebestreifens ist.

Das oben beschriebene Dampfbremsen-Klebeband wird insbesondere beim Herstellen einer dampfdichten Verbindung beim Dachausbau an einer Firstpfette verwendet. Der Dampfbremsstreifen wird über die Firstpfette gelegt, und zum dampfdichten Abdichten wird anschließend der jeweilige Schutz von den Dampfbremsen-Klebestreifen abgezogen, um die Dampfbremsen-Klebestreifen mit einer benachbarten Dampfbremse dampfdicht zu verkleben.

Weitere vorteilhafte Ausgestaltungen und Merkmale werden in der nachfolgenden Zeichnung sowie deren Beschreibung näher erläutert. Es zeigen:
- Fig. 1: ein erstes Dampfbremsen-Klebeband;
- Fig. 2: ein zweites Dampfbremsen-Klebeband;
- Fig. 3: ein Dampfbremsen-Klebeband gemäß Fig. 1, befestigt auf einer Firstpfette; und
- Fig. 4: das erste Klebeband im an Dampfbremsen angeklebten Zustand.

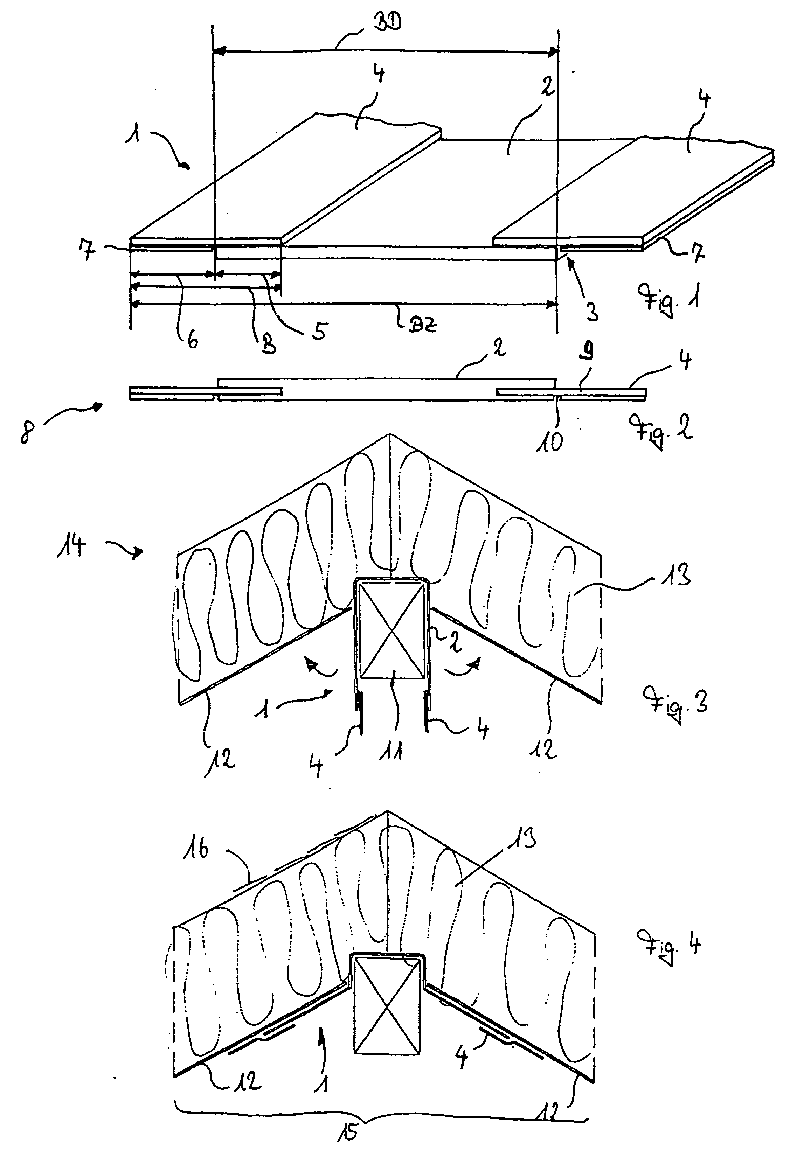

Figur 1 zeigt ein erstes Dampfbremsen-Klebeband 1. Das erste Dampfbremsen-Klebeband 1 hat einen Dampfbremsstreifen 2 sowie an jeweils beiden Längsrändem 3 einen einseitig klebenden Dampfbremsen-Klebestreifen 4. Die Breite B des Dampfbremsen-Klebestreifens 4 ist so angeordnet, daß der Dampfbremsstreifen 2 überlappt ist. Dieser überlappende erste Abschnitt 5 ist mit dem Dampfbremsstreifen 2 verklebt oder verschweißt. Ein zweiter Abschnitt 6, der über den Dampfbremsstreifen 2 herausragt, ist mit einem Schutz 7 versehen, der abziehbar ist. Der Dampfbremsstreifen 2 ist vorzugsweise schichtweise aufgebaut, wobei eine Oberfläche rutschsicher ausgestattet ist. Darüber hinaus hat der Dampfbremsstreifen 2 insbesondere eine Verstärkungslage, beispielsweise mittels einer Armierung. Die Dampfbremsen-Klebestreifen 4 sind vorzugsweise so aufgebaut, wie es aus dem schon oben angeführten DE 297 23 454 hervorgeht. Bezüglich des Aufbaus der Dampfbremsen-Klebestreifen 4 wird daher auf diese Schrift verwiesen.

Die Breite eines Dampfbremsen-Klebestreifens 4 und die Breite BD des Dampfbremsstreifens 2 sind vorzugsweise so aufeinander abgestimmt, daß sich eine Zwischenbreite des ersten Dampfbremsen-Klebebandes 1 von etwa 70 cm ergibt.

Figur 2 zeigt ein zweites Dampfbremsen-Klebeband 8. Das zweite Dampfbremsen-Klebeband 8 hat die Dampfbremsen-Klebestreifen 4 in einem Lagenaufbau des Dampfbremsstreifens 2 mit integriert. Der Dampfbremsen-Klebestreifen 4 hat vorzugsweise einen Folienträger 9, auf den ein Kleber 10 aufgebracht ist. Der Folienträger 9 ist aus Material, welches sich mit einem Material des Dampfbremsstreifens 2 gut anschließen läßt, beispielsweise durch entsprechendes Verschweißen oder Verkleben. Die Integrierung des Folienträgers 9 in den Dampfbremsstreifen 2 hat den Vorteil, daß eine besonders dichte Verbindung zwischen dem Dampfbremsstreifen 2 und dem Dampfbremsen-Klebestreifen 4 ausgebildet ist, die unabhängig vom Kleber 10 ist.

Figur 3 zeigt die Verwendung des ersten Dampfbremsen-Klebebandes 1 auf einer Firstpfette 11. Zu beiden Seiten der Firstpfette 11 ist jeweils eine Dampfbremse 12 angeordnet. Über den Dampfbremsen 12 befindet sich eine Dämmung 13 für dieses Dach 14. Das erste Dampfbremsen-Klebeband 1 ist so über die Firstpfette 11 gelegt, daß der Dampfbremsstreifen 2 entlang der Länge der Firstpfette 11 sich erstreckt. Die Dampfbremsen-Klebestreifen 4 hängen entlang der Firstpfette 11 nach unten. Zur Herstellung einer luftdichten Verbindung werden nun die Dampfbremsen-Klebestreifen 4 an die benachbarten Dampfbremsen 12 angeklebt, wie dies durch die eingezeichneten Pfeile angedeutet ist.

Figur 4 zeigt die dampfdichte Verbindung im Endzustand zwischen dem ersten Dampfbremsen-Klebeband 1 und den benachbarten Dampfbremsen 12. Aufgrund dieser insgesamt luftdichten Abdichtung 15 besteht einerseits eine ausreichende Wärmedichtung durch die Dämmung 13, andererseits in Verbindung mit den auf der Dämmung 13 aufliegenden Dachziegeln 16 ein ausreichender Schutz vor Feuchtigkeit. Wie somit aus den Fig. 3 und 4 ersichtlich, verhindert der über die Längsränder des Dampfbremsstreifens 2 überragende Dampfbremsen-Klebestreifen 4, daß ein Teil des Dampfbremsstreifens 2 von den Dampfbremsen 12 nach unten absteht, wie dies bei einem zweiseitig klebenden Dampfbremsen-Klebeband der Fall wäre, das auf den Dampfbremsstreifen 2 angebracht würde. Vielmehr erlaubt die Anordnung des einseitig klebenden Dampfbremsen-Klebestreifens 4, daß eine große, dichtende Fläche entsteht, die ein Hindurchkriechen von warmer Luft nach außen verhindert.

## Patentansprüche

1. Einseitig klebendes Dampfbremsen-Klebeband (1;8) mit einem Dampfbremsstreifen (2), welcher eine Breite (BD) von mindestens 35 Zentimetern hat und an seinen jeweils beiden Längsrändern (3) einen einseitig klebenden Dampfbremsen-Klebestreifen (4) aufweist, wobei jeder Dampfbremsen-Klebestreifen (4) auf seiner Klebeseite mit einem separat abziehbaren Schutz (7) versehen ist, welcher ein unbeabsichtigtes Verkleben der Klebestreifen (4) verhindert.

2. Dampfbremsen-Klebeband (1; 8) nach Anspruch 1, bei welchem der Dampfbremsen-Klebestreifen (4) eine Breite (B) zwischen 4 Zentimeter und 10 Zentimeter aufweist.

3. Dampfbremsen-Klebeband (1; 8) nach Anspruch 1 oder 2, bei welchem der Dampfbremsen-Klebestreifen (4) einen Folienträger (9) für einen Kleber (10) aufweist.

4. Dampfbremsen-Klebeband (1; 8) nach einem der Ansprüche 1 bis 3, bei welchem der Dampfbremsen-Klebestreifen (4) einen mit dem Schutz (7) versehenen Abschnitt (6) einer Breite von 1,5 bis 3 Zentimetern aufweist.

5. Dampfbremsen-Klebeband (8) nach einem der Ansprüche 1 bis 4, bei welchem der Dampfbremsen-Klebestreifen (4) in einen Lagenaufbau des Dampfbremsstreifens (2) mitintegriert ist.

6. Dampfbremsen-Klebeband (1) nach einem der Ansprüche 1 bis 4, bei welchem der Dampfbremsen-Klebestreifen (4) teilweise auf den Dampfbremsstreifen (2) aufgeklebt ist.

7. Dampfbremsen-Klebeband (1; 8) nach einem der Ansprüche 1 bis 6, bei welchem der Dampfbremsstreifen (2) eine Breite von etwa 60 Zentimeter aufweist.

8. Verfahren zum Herstellen einer dampfdichten Verbindung bei einem Dachausbau an einer Firstpfette (11), bei welchem ein Dampfbremsen-Klebeband (1; 8) nach einem der vorhergehenden Ansprüche 1 bis 7 verwendet wird und der Dampfbremsstreifen (2) über die Firstpfette (11) gelegt wird und zum dampfdichten Abdichten der jeweilige Schutz (10) von den Dampfbremsen-Klebestreifen (4) abgezogen wird, um die Dampfbremsen-Klebestreifen (4) mit jeweils einer benachbarten Dampfbremse (12) dampfdicht zu verkleben.

## Claims

1. Single-sided adhesive vapour barrier tape (1; 8) having a vapour barrier strip (2) which has a width (BD) of at least 35 cm and, on each of its two long edges (3), has a single-sided adhesive vapour barrier strip (4), each adhesive vapour barrier strip (4) being provided on its adhesive side with a protective means (7-) which can be pulled off separately and prevents inadvertent adhesion of the adhesive strips (4).

2. Adhesive vapour barrier tape (1; 8) according to Claim 1, in which the adhesive vapour barrier strip (4) has a width (B) between 4 cm and 10 cm.

3. Adhesive vapour barrier tape (1; 8) according to Claim 1 or 2, in which the adhesive vapour barrier strip (4) has a film substrate (9) for an adhesive (10).

4. Adhesive vapour barrier tape (1; 8) according to one of Claims 1 to 3, in which the adhesive vapour barrier strip (4) has a portion (6), provided with the protective means (7), with a width of 1.5 to 3 cm.

5. Adhesive vapour barrier tape (8) according to one of Claims 1 to 4, in which the adhesive vapour barrier strip (4) is co-integrated into a layer structure of the vapour barrier strip (2).

6. Adhesive vapour barrier tape (1) according to one of Claims 1 to 4, in which the adhesive vapour barrier strip (4) is partially bonded to the vapour barrier strip (2).

7. Adhesive vapour barrier tape (1; 8) according to one of Claims 1 to 6, in which the vapour barrier strip (2) has a width of about 60 cm.

8. Method of producing a vapour-tight joint when finishing a roof at a ridge purlin (11), in which an adhesive vapour barrier tape (1; 8) according to one of the preceding claims 1 to 7 is used, and the vapour barrier strip (2) is laid over the ridge purlin (11) and, for the purpose of vapour-tight sealing, the respective protective means (10) is pulled off the adhesive vapour barrier strips (4) in order to bond the adhesive vapour barrier strips (4) in a vapour-tight manner to an adjacent vapour barrier (12) in each case.

## Revendications

1. Ruban adhésif (1,8) d'un seul côté avec une bande de barrière pare-vapeur (2), laquelle ayant une largeur (BD) d'au moins 35 centimètres et laquelle ayant à ses bords (3) longitudinaux respectivement une bande adhésive de barrière pare-vapeur (4), chaque bande adhésive de pare-vapeur (4) étant prévu sur son côté adhésif d'une protection (7) pelable séparément, laquelle empêche une adhésion intempestive des bandes adhésives (4).

2. Ruban adhésif avec barrière pare-vapeur (1,8) selon la revendication 1, dans lequel la bande adhésive de barrière pare-vapeur (4) a une largeur (B) comprise entre 4 centimètres et 10 centimètres.

3. Ruban adhésif avec barrière pare-vapeur (1,8) selon la revendication 1 ou 2 dans lequel la bande adhésive de barrière pare-vapeur (4) ayant un support de film (9) pour une colle (10).

4. Ruban adhésif avec barrière pare-vapeur (1,8) selon une des revendications 1 à 3 dans lequel la bande adhésive de barrière pare-vapeur (4) ayant une portion (6) prévu avec une protection (7) d'une largeur compris entre 1,5 à 3 centimètres.

5. Ruban adhésif avec barrière pare-vapeur (8) selon une des revendications 1 à 4 dans lequel la bande adhésive de pare-vapeur (4) est intégré dans une structure des couches de la bande de barrière pare-vapeur (2).

6. Ruban adhésif avec barrière pare-vapeur (1) selon une des revendications 1 à 4 dans lequel la bande adhésive avec barrière pare-vapeur (4) est partiellement collée sur la bande de barrière pare-vapeur (2).

7. Ruban adhésif avec barrière pare-vapeur (1,8) selon une des revendications 1 à 6, dans lequel la bande de la barrière pare-vapeur (2) ayant une largeur d'environ 60 centimètres.

8. Procédé de fabrication d'un assemblage imperméable à la vapeur dans le cadre d'un comble à une poutre de faîte (11) dans laquelle on utilise un ruban adhésif avec barrière pare-vapeur (1,8) selon une des revendications précédentes 1 à 7 et la bande de barrière pare-vapeur (2) étant posé sur la poutre de faîte (11) et la protection (10) respectivement étant pelée de la bande adhésive avec barrière pare-vapeur (2) pour coller d'une manière imperméable à la vapeur la bande adhésive avec barrière pare-vapeur (4) à une barrière pare-vapeur (12) voisine respectivement.
